# EUROPEAN PATENT SPECIFICATION

(11) **EP 2 741 446 B1**
(45) Date of publication and mention of the grant of the patent: **11.10.2017**
(21) Application number: 13005699.7
(22) Date of filing: 06.12.2013
(51) Int. Cl.: H04L 12/24, H04W 24/04

(54) **Intelligent large network configuration management service**
Intelligenter großer Netzwerkkonfigurationsverwaltungsdienst
Service de gestion de configuration de grand réseau intelligent

(30) Priority: 06.12.2012 US 201261734017 P
(43) Date of publication of application: 11.06.2014
(73) Proprietor: Telefonaktiebolaget LM Ericsson (publ), 164 83 Stockholm (SE)
(72) Inventor: Sahabi, Afshin, Ontario, K2K 1V4 (CA)
(74) Representative: Ericsson

(56) References cited:
- EP-A2- 2 339 461
- US-A1- 2007 093 243
- US-A1- 2008 281 958
- US-B1- 7 979 854

## Description

### Related Application

The present application is related to, and claims priority from, U.S. Provisional Patent Application No. 61/734,017 filed December 6, 2012, entitled "Intelligent Large Network Configuration Management", to Afshin Sahabi.

### Technical Field

The present application relates generally to network management and more particularly to a system and method of deploying maintenance tasks in large networks and associated nodes.

### Background

Deploying service impacting changes like patches/upgrades to a large wireless network that is made of hundreds or thousands of network nodes is challenging and time consuming. While simple 'automation' can help with speed, many service providers do not wish to use automated systems since network outages cannot be controlled. This is especially critical in wireless networks where large trouble free coverage areas are expected by its users.

Instead, network service providers usually hand select nodes in chunks of 10-25 nodes. This selection unfortunately, remains a manual and tedious process when a network can have thousands of nodes.

Existing tools do not have a 'true' knowledge of the network geographical and maintenance constraints. That is, the nodes are often simply labeled with numerical codes in a database covering say, a part of a city or region.

Some tools have gone a bit further. They allow a user to create groups of network elements (files) to perform the actions in bulk. While this is helpful it lacks practicality. As an example, wireless networks are in constant change. And with hundreds or even thousands of nodes in the network, going through additions/removals and constantly maintaining these files is not practical.

In the end, tool operators or users are expected to do that manually and then hand over instructions to the tools to execute those instructions. Such tools, in practice, are not used by network operators due to large maintenance of the grouping information and lack of other needed smarts in performing these actions effectively.

Wireless operators have used neighbor information extracted from node configurations but still rely on user inputs to provide this information. However, in practice network operators need more flexibility and the job is often left to costly field technicians. As a result, end users or the operator's customers are made to accept network outages. This leads to an increase in complaints.

In a very large network (2-3000 cellular data network nodes) a software upgrade is almost impossible to be done correctly. The frequency of these actions (e.g. patches becoming available, major configuration adjustments, etc.) is more than the speed of deployment. Since the networks are always growing, there is no reasonable way of performing these actions timely and with manageable costs. This causes operators to force the deployment across the network with maximum speed - causing nodes to be unavailable to some end users.

Accordingly, a need exists for a new method to provide network upgrades in the most cost effective and holistic way.

Document EP 2 339 461 A2 may be construed to disclose a network for remotely managing a plurality of remote devices that are each individually configurable to have selected operating characteristics, including a server connected to the network and to the plurality of remote devices, and a display coupled to a computer which is connected to the network. Also included are means for assigning a common icon to each remote device of the same type and displaying the icons on the server display, and means for coloring each icon to indicate a current configuration status of each remote device and for displaying the color on the icon on the display.

Document US 2008/281958 A1 may be construed to disclose systems and methods for implementing a unified console for managing computing-based devices. There is a unified management solution to efficiently manage one or more workloads or a plurality of tasks performed by a user for managing the resources of applications in a computer network that includes the computing-based devices. The system can be implemented by providing a combined functionality that includes features of monitor ing and update services, in a single console.

### Summary

According to the invention, there are provided a method and an apparatus according to the independent claims. Developments are set forth in the dependent claims.

Preferably, there is a method of automating the deployment of maintenance tasks to network nodes in a communication network. The method preferably comprises identifying an area of the communication network requiring a maintenance task and selecting a network node in the identified area for receiving a maintenance task to be performed. Usage information is preferably obtained from neighboring nodes which could impact the selected network node. The method preferably further comprises confirming that the selected network node is ready to receive a maintenance task and sending a request to the selected network node containing a maintenance task to be completed at the selected network node if the selected network node is ready to complete the maintenance task.

Preferably, an area is identified by selecting one or more geographical locations of the communication network as a Maintenance Region (MR) having similar maintenance requirements. A Maintenance Policy (MP) is then preferably associated with the MR. The MP preferably provides scheduling information related to service impacting actions and rules for the associated MR.

Other aspects and features of the present invention will become apparent to those of ordinary skill in the art upon review of the following description of specific embodiments of the invention in conjunction with the accompanying figures.

### Brief Description of the Drawings

Fig. 1 is a diagram illustrating a typical map used to denote maintenance regions with similar policies in accordance with the principles of the present invention;
Fig. 2 is an exemplary maintenance region and policy matrix illustrating the principles of the present invention;
Fig. 3 is a diagram illustrating a close-up view of one maintenance region of Fig. 1;
Fig. 4 and 5 are flow diagrams illustrating the general steps used to provide exemplary maintenance update actions in accordance with the principles of the present invention;
Fig. 6 is a flow diagram illustrating the general steps for deriving candidacy number of maintenance tasks in accordance with a known MR and MP; and
Fig. 7 is a table illustrating the relationship between network nodes undergoing a maintenance update, maintenance tasks to be performed and candidacy number.

### Detailed Description of the Embodiments

The present invention proposes a method and system for automating service impacting maintenance activities to network elements. The present invention automates all considerations in choosing the right network element for service updates to minimize impacting network operations. The maintenance activities can be provided by controlled outages as per the needs of the network operator and its customers. It is adaptive to various geographic and time constraints such that service impacting activities are minimized. This is accomplished by defining a Maintenance Regions (MR). A Maintenance Region is a geographical area on the map that has similar maintenance behavior/constraints. Examples: Airport area, business district, nightlife area. There is always a 'default' MR which is everywhere else on the map. This is an activity that is done on a map generating a region like a polygon. A Maintenance Policy (MP) is then defined. The MP is associated with an MR. Maintenance Policy captures information about when is the best time to perform service impacting actions and rules about how many times each action is allowed to be performed during each time period. MP is a set of time related rules with an expiry. Before a maintenance activity, a check to a Network Element is then implemented to confirm platform software compatibility. A confirmation is obtained that an NE (Network Element) can provide its geographical location. The NE neighbor information is then captured. Once obtained, the above information is used in an algorithm that at any given time can select the preferred candidate network element to receive maintenance actions including a service impacting action (like a software upgrade). Then, based on capacity of running parallel activities and constraints defined by the MP, the algorithm performs an optimized and maximum number of actions simultaneously.

As indicated previously, when the time comes to do an upgrade, a network operator will need to cross reference every node in its network with its geographical locations on a map and figure out if 'now' is the right time to perform the action (e.g. don't perform an action at 1 am if the node is covering the area in the city with night life), ensure the platform on that node is compatible with deploying action, ensure that this is the only node in the neighbor list that is going to be receiving the action. All these actions need to happen node by node in a large network. As indicated above, this is extremely time consuming in large network and can lead to network node downtime.

The present invention proposes a method and system for automating service updates to network elements. The present method automates all considerations in choosing the right network element for service updates while minimizing the impact to network operations. The maintenance activities can be performed by controlled outages as per the needs of the network operator and its customers.

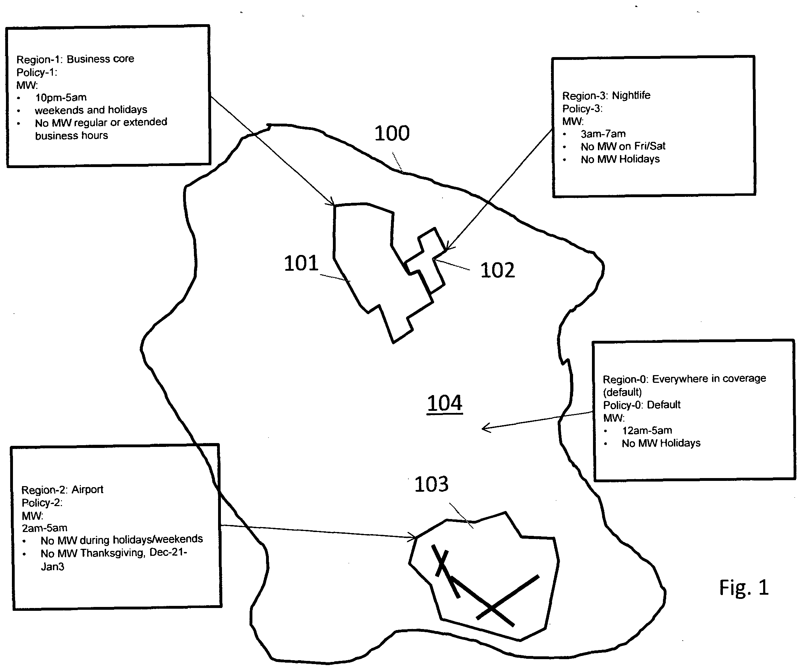

With reference to Fig. 1, we have shown a diagram of an exemplary network area 100 which may be comprised of several thousand network nodes. The network 100 is made up of geographic regions which may include areas with business cores 101, nightlife areas 102, airports 103 and other regions 104 such as residential sections, suburbs, vacant land, lakes, rivers, etc. otherwise regions which may at any one time have less end users or subscribers than in other identified regions of the network.

According to an exemplary embodiment, these various regions are identified as a Maintenance Region (MR). A Maintenance Region is defined as a geographical area on the map that has similar maintenance behavior/constraints. Examples are shown in Fig. 1 as the business core 101, Nightlife area 102, Airport area 103, etc. A'default' MR is everywhere else on the map. In large networks covering several towns and cities, a network may have several of the same Mrs. In one exemplary embodiment, the creation of the MR areas is an activity that is done on a map generating a region like a polygon. Initially, a Maintenance Region is defined. This can be done with any map software. A polygon is drawn around the geographical areas that behave or are impacted the same way and those that should therefore follow the same maintenance schedule, considerations and constraints. It should be noted that map software usually designate a geographical region with a polygon but other shapes may be suitable to designate such a region. This region is saved in a format that the software can then read. (e.g. on Google Earth, KML is the format used). The night-club area in this city never (or rarely) moves. The Network Equipment that covers that area may be changed, added, removed or moved around, but the idea is not about mapping NEs by user but to identify the region's operating behavior. In other words, the traffic usage behavior of a region in the coverage area of the network is identified. This is done is such a way that service impacting activities are done with knowledge of the location and behavior of a Maintenance Region.

Since each defined maintenance region can be impacted differently when a service impacting action is taken, a Maintenance Policy (MP) is then defined for each region. A Maintenance Policy is associated with a Maintenance Region according to predetermined schedules and rules. The Maintenance Policy captures information associated with the ideal time to perform service impacting actions as well as possible maintenance tasks during those times. A MP thus defines a set of time related rules with an expiry. A MP defines Maintenance windows (what time of the day is the best time to perform service impacting actions) e.g. 12am to 4am in a residential area and 4am to 8am in a night club area. The concept of MP gives the operator the option of not treating the whole network the same way when a maintenance task is required to be pushed to the network nodes. An MP also defines what and when actions can take place and how many of them can be completed at the same time. For example, pre-checks, downloads, backhaul impacting activities, tasks that are not service impacting activities and those service impacting activities like resets.

The MP is provided with a set of time rules. For example, a typical residential Maintenance Region, such as region 104 in Fig. 1, may define the following maintenance window:
Every weeknight from 12am to 5am;
Except in Christmas break;
Except on July 4th;
Except on a Federal or state holidays.

The MR may also define the maintenance rules, such as:
During a Maintenance Window (MW), 20 downloads, unlimited pre-checks and 10 node resets can be performed. Outside a MW, 10 downloads, 10 pre-checks and no node resets can be performed.

The business core region 101 would on the other hand have a different MP based on a maintenance window (MW)of 10pm to 5 am and during weekends and holidays when there is likely smaller chance of impacting service to end users in that region.

The nightlife region 102 would have again a different MP with a MW ideally defined between 3 and 7 am but with no maintenance work done on weekends or holidays.

The airport region 103 yet again would also have a different MP with a MW defined between 2 and 5 am with no MW during holidays, weekends and the Thanksgiving and Christmas periods which is the busiest travel time of the year.

Other time constraint rules similar to the above can also be considered to exclude or include a time window for Maintenance, for example, a specified time that some level of service impacting activity is tolerated since the network is not needed at its nominal capacity.

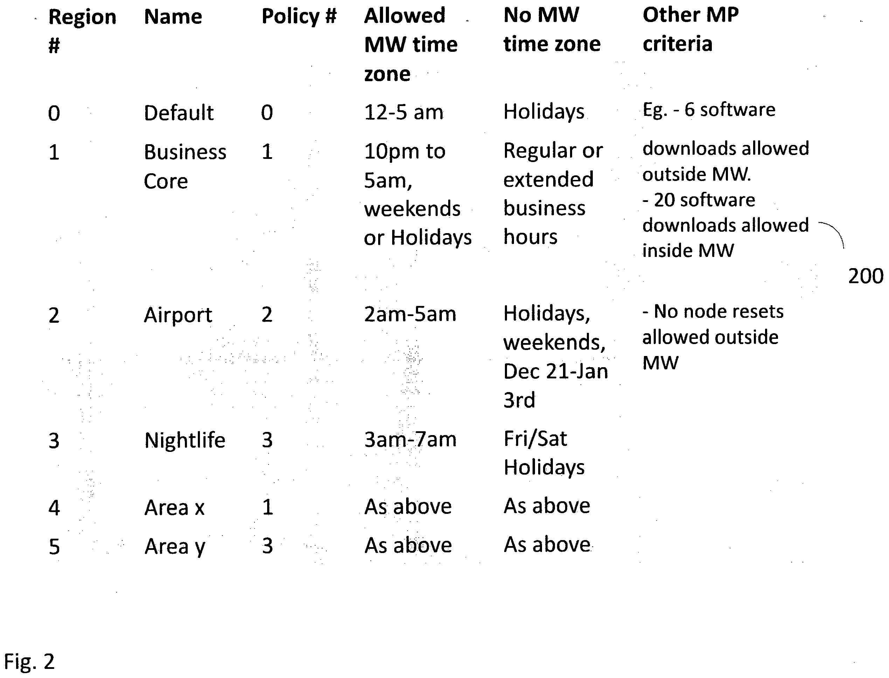

Fig. 2 is an exemplary embodiment of a maintenance region and maintenance policy matrix 200 which can be completed by the service provider according to their unique network layout and operational constraints. Such a matrix is completed in accordance to network peculiarities, Maintenance region and policies as indicated above in relation to Fig. 1.

Although the assignment of maintenance regions and maintenance policies of such a matrix can be completed manually using mapping software and known end user habits and network conditions for the operator's network, the completion of such a matrix could also be done dynamically.

For example, a pattern of traffic behavior for the entire network could be used to determine regions of high activity at various time of day. This information could for example be derived from historical traffic usage information collected over time by the network operator. This way, the operator could derive a live map based on such traffic behavior and define ideal maintenance schedules for each region defined as having a different user traffic behavior. The maintenance task related rules can also be determined dynamically based on back-haul availability and load monitoring of nodes in the network.

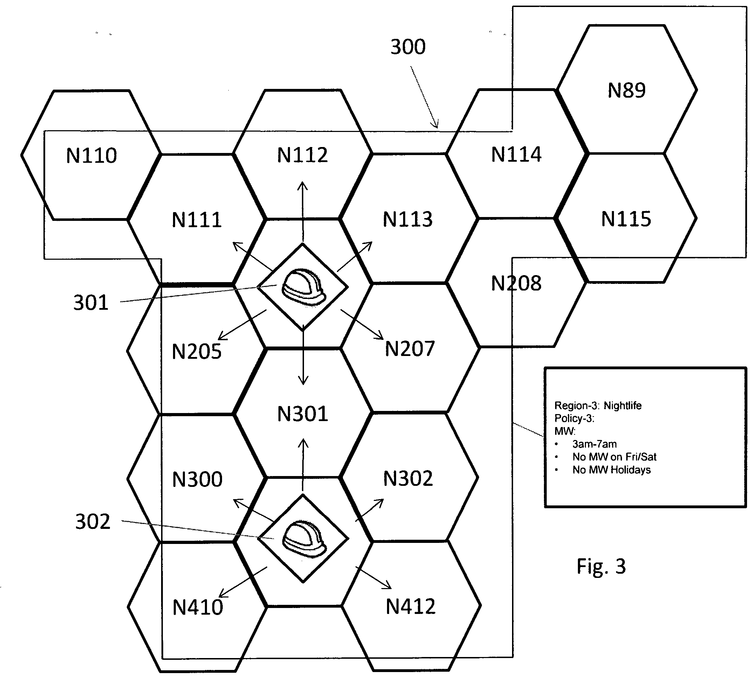

Fig. 3 is a diagram illustrating a maintenance region 300 also shown as MR 3 103 of the exemplary network 100 shown in Fig. 1. The MR 300 is one of the regions of the network 100 that has received a maintenance task request from the operator. MR 300 is comprised of multiple network nodes, each define within a geographical area where each node is subject to a similar maintenance window, schedule or policy.

As will be described further below, before a maintenance task is pushed to a network node, certain conditions have to be met.

As an example, before a service activity is started, a verification of a target Network Element (NE) is performed to confirm platform software compatibility. This is called an implementation pre-requisite mechanism of a network element. This is to ensure the NE has the knowledge that a certain maintenance activity on the NE is permitted. An example would be to make the NE provide its software version, its platform software version, backward compatibility rules etc. This will enable a maintenance application engine which deploys new maintenance tasks to calculate if a certain activity is permitted on the network element. For example, when a patch is released and is to be deployed to the whole network, the software can ensure the NE's software or its platform version has the right software version to receive this patch.

In prior art maintenance task deployments, this activity required manual intervention. This took a considerable amount of time to select and choose compatible network elements for a software patch or upgrade activity. This activity required manually looking up information in various sub-systems.

The present method ensures the compatibility of certain actions with a network node can be automated.

The network nodes are able to provide their version, compatibility information and a 'maintenance activity' and also its compatibility information: E.g. A new patch needs to capture what is its minimum version requirement or patch that is applicable. Or a maintenance configuration modification activity needs to capture its prerequisites.

Once compatibility information is received, a confirmation is obtained that a NE (Network Element) can provide its geographical location. Network elements need to be aware of their geographical locations. For example, on all cellular networks, there is a GPS component for signal synchronization that has accurate geographical location information of the network element.

The NE neighbor information is then captured. NE neighbor information can be obtained from the local base station which maintains a neighbor relation table (NRT). For example, in Fig. 3, before node 301 and 302 can receive a maintenance task request, a verification of neighboring nodes is done to make sure service interrupting tasks are also not taking place in an adjacent node.

Once obtained, the above information is used at any given time to select the next candidate network element to receive a service impacting action (like a software upgrade). This selection also takes into consideration system or network capacity of running parallel activities on portions of the network. The process is optimized such that the maximum number of maintenance tasks can be completed simultaneously.

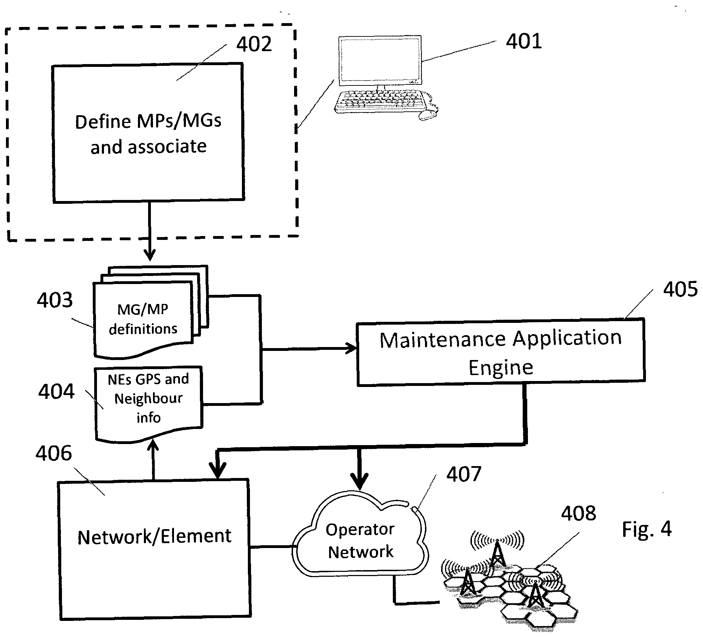

In Fig. 4, we have shown a high level diagram illustrating the maintenance task assignment process in accordance with an exemplary embodiment of the present invention. A network manager, such as workstation 401 used by a network operator is first used to create 402 the maintenance regions and maintenance policies 403 of the network map, earlier illustrated in Figs 1 and 2. Information associated with the network capacity, interface capacity, CPU availability, neighbor information, etc. is collected at block 404. The maintenance application engine 405 then implements a maintenance deployment sequence to the network using the collected information 403 and 404 and maintenance activities are issued to the network nodes via a network/element management tool 406. The maintenance activities are deployed throughout the network 407 and specific nodes in of a maintenance region 408.

In operation, it is assumed that the overall network can run X number of parallel activities (constraint by Element management's interface capacity to transfer data to network elements, CPU availability and other important Key Performance Indicators (KPIs). At any time, X number of actions can run. If an action is completed, another needs to be chosen and started: E.g. what is the best, highest priority activity to do if one action is completed. This is determined by the maintenance application engine 405 which implements a number of the rules and uses above captured information.

By employing rules based on MR, its associated MP, dependency and prerequisite information and capturing proximity (nodes neighboring information) and nodes geographical information, a service impacting activity can be deployed throughout the network as fast as possible while taking into account all constraints that an operator may require to minimize and control outages with minimal chance of human errors.

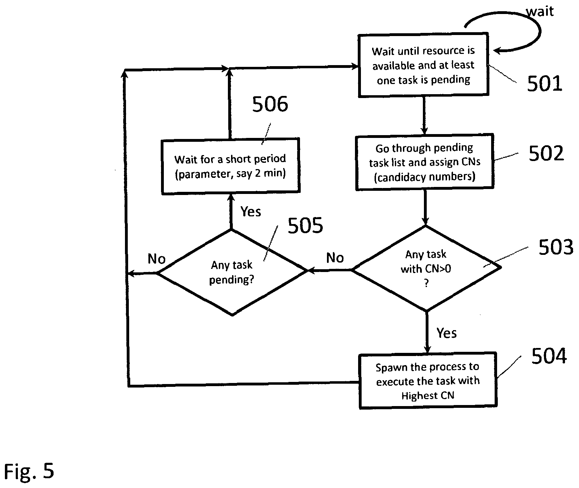

The maintenance task assignment process needs to give priority to complete work upgrades on nodes in the areas that are currently in a maintenance window. This is illustrated in Fig. 5.

The maintenance deployment sequence first at block 501 determines if a network management server resource, e.g. CPU availability or required bandwidth is available and that at least one maintenance task is pending to be completed at that node. At block 502, the application scans through a list of pending maintenance tasks and assign each task for each node a candidacy number (CN). If a maintenance task fails any of the policy (MP) rules or dependency rules, then it cannot execute and is assigned a CN of zero (CN=0). Then, at block 503, if any task has a CN greater than 0, the task with the highest CN is spawned and starts executing, block 504 and the process returns to the re-evaluating block 501.

If, at block 503, there are no tasks with CN's greater than 0, then a check is made, at block 505 to determine if any tasks are pending. If none are pending, the process returns to block 501 to wait until a resource becomes available. If a task is pending, then a wait period is initiated at block 506. This wait period is needed to allow some tasks to be completed, whereas wait period of block 501 is to enable the management server resources to become available. At block 506, new tasks can be run but other tasks may need to finish first.

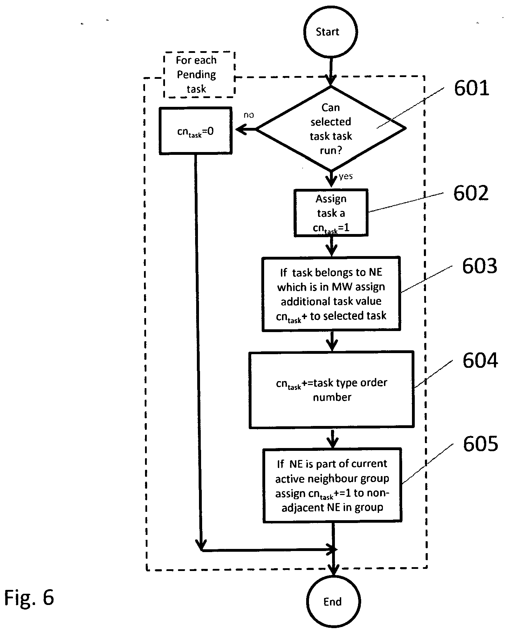

A more detailed description of how a candidacy number (CN) can be derived (block 502) is illustrated with reference to Fig. 6.

At the first step, the query 'can a task be run', is made at block 601. A task can be run if it doesn't violate any maintenance policy rules for that maintenance region. Otherwise, the candidacy number is set to zero until such time as the node is ready to receive a particular maintenance task. MP rules are checked against the candidate task and if any of them fail, a task cannot execute and the CN becomes zero (0). For example:
- A service impacting (SI) task cannot execute if for the given time, a maximum number of SI tasks are already running and is set to 0 outside a given MW;
- Tasks are exceeding the maximum number for that type of task;
- An SI task is assigned to a node where another neighboring node is also performing an SI task;
- A precondition maintenance task of the given task is not met. For example, if one maintenance task is a software reset and it requires another task on the same NE like a software download completed;
- A node compatibility check fails.

If the task can run, a task weight of 1 is added to the task, block 602. At block 603, if the task belongs to a network node which is within a specified maintenance window, a further custom weight CNtask+ is further added to the candidacy number. This effectively makes the algorithm give priority to completing tasks on regions within their maintenance windows.

At block 604, the task weight is adjusted so that tasks that have order to completion finish faster. For example if the order of running different tasks is defined as step T1 then T2 then T3, by adding a CN of 3 to a node that can run T3, that task is priori-tized over another node's ability to run T2. This is important since it pushes the system to give priority to complete work on node by node basis.

If the selected network node is part of an active neighbor group 605, an additional point is added to the candidacy number weight. A neighbor group is a collection of NEs that are not in any neighbor relationship with each other. Block 605 ensures that NEs that are not in neighbor relationship with each other get priority in performing maintenance tasks on them.

If other actions on NEs can be found, it can be queued for execution. If none can be found, it means either: the process is complete which can also be checked by following a to-do list, or the work scheduler needs to wait and re-check in a set time.

With the maintenance deployment sequence, priority is given to complete upgrades for service impacting actions as soon as possible. For example, if a first task is a software download followed by a pre-check activity task, followed by an install task and then a software reset activation task is required, then the highest priority and candidacy number weight will go to the task of perform a software activation/reset as soon as a node is available to do so since it is a service impacting task.

As part of the process, the maintenance deployment sequence also needs to scan nodes in various geographical regions, select those in located in a maintenance window first, then choose the next network element that can complete the service impacting task, unless it is not available for the next task.

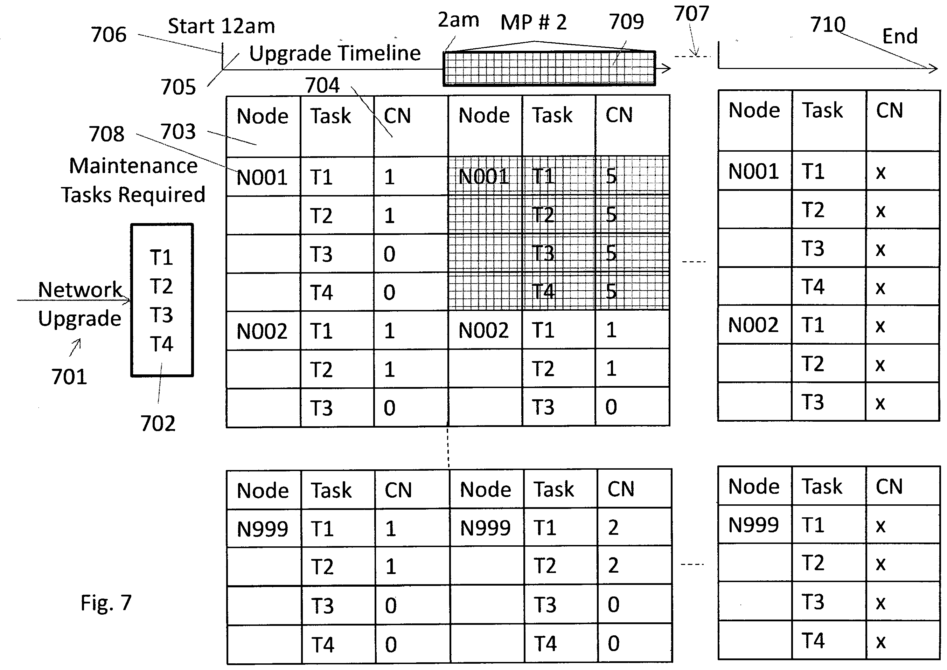

An exemplary view of a maintenance deployment sequence matrix is illustrated in Fig. 7. When the network operator requires a network upgrade 701, the upgrade is defined into a number of sequential tasks 702, e.g. T1: software download, T2: software pre-check, T3: program a second boot load memory and T4: activate a new load from the new flashed memory bank. Although this example is comprised of 4 tasks, there can be many different maintenance tasks scheduled to run and each may have a different order. For example, a radio reset may have 2 tasks in different order than a software upgrade. The matrix illustrates that maintenance upgrade status for each node 703 in the network, e.g. N001 to N999. Each node over time will be required to complete each of the 4 tasks 702. The candidacy number weight 704 is computed according to the flow diagram shown in Fig. 6. The CN computation continues over the upgrade timeline 705 until all the nodes have been upgraded. As an example, if the upgrade start at midnight 706 on a certain day, the CN weight for each node will vary over time 707 according to its location in the network and in particular its predetermined maintenance region, maintenance policy, etc. In the example illustrated in Fig. 7, node N001 708 is initially, during the first pass of the maintenance deployment sequence, not in a maintenance window and therefore has limited available resources to complete a service interrupting task, such as T3 or T4.

It could however, complete tasks T1 and T2 while continuing to operate normally. On the other hand, other network nodes (not shown), e.g. those in MR #0 and #1 may be able to complete all 4 tasks since they appear in a maintenance window at midnight. In the case of node N001, the first maintenance window 709 comes up at 2am since node N001 is located in MR #2. Assuming the right conditions are met, such as no other adjacent nodes also completing the full 4 tasks, node N001 could complete tasks T1 to T4 during that maintenance window 709. The goal is that by the end of the upgrade timeline 710, which could be from several hours to several days, all nodes of the network, N001 to N999 have completed all 4 tasks and no other tasks remain to be completed.

During selection of the next NE and a related maintenance activity, the process also makes sure the neighbor 'law' is respected: i.e. no service impacting action can be performed on a network element while a network element in its neighborhood is also going through a service impacting activity, see Fig. 3. Placing the above information and rules will guarantee a service impacting activity (which is usually a series of several steps) throughout the whole network (or subnet), can be completed with minimal network impact, as fast as possible, e.g. utilizing maximum parallel activities, and following what the network operator had defined as rules of maintenance for various geographical location.

As a result, a successful network-wide action will be achieved automatically and one which does not require real-time human interaction.

The method and system provide a robust monitoring and logging mechanism that at any time provides the user/operator with focused logs of failures: in a network of thousands of elements where each activity generates hundreds of lines of log, it is important to isolate failures in a clear way. Operator time should be spent addressing the issues not finding the issues.

The present method provides a clear progress report that shows the progress of activity throughout the network, ability to pause, resume or abort progress of network wide automated activity on best effort basis and as a minimum to control the next task launch. The ability to have 'expiry date' on Maintenance Policies and ability to exclude certain geographical areas to be involved in the network wide operation or certain network elements. For example, there are usually test sites or equipment that if not excluded will cause long timeout and un-needed errors.

Additionally, this method can collect progressive historical data on action timings against each NE. The same algorithm can be used to simulate a deployment of a maintenance activity to provide a snapshot of what to expect or in real time give the operator a view of the next N upcoming activities. This way, the operator has a clear view on what to expect and where to expect network impacts.

As a result, with the present method and system, a network operator is able to spend a few hours to capture all information that requires manual input in a simple and user friendly way and in a way that does not require continuous and bulky change and modification and then extract other configurations that is available from the network element itself to perform a service upgrade impacting on a very large network efficiently, with minimum or optimized outage, without human intervention and as fast as possible.

The present invention can be realized in hardware, or a combination of hardware and software. Any kind of computing system, or other apparatus adapted for carrying out the methods described herein, is suited to perform the functions described herein. A typical combination of hardware and software could be a specialized computer system, e.g., a node, having one or more processing elements and a computer program stored on storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

In addition, unless mention was made above to the contrary, it should be noted that all of the accompanying drawings are not to scale. It will be appreciated by persons skilled in the art that the present invention is not limited to what has been particularly shown and described herein above. A variety of modifications and variations are possible in light of the above teachings without departing from the scope of the appended claims.

## Claims

1. A method of automating a deployment of maintenance tasks to network nodes in a communication network, comprising:
identifying an area (101, 102, 103, 104) of said communication network requiring a maintenance task;
selecting a network node (301, 302) in said identified area for receiving a maintenance task request to perform the maintenance task; obtaining network node neighbor information from neighboring nodes impacting said selected network node, wherein said network node neighbor information comprises an indication as to whether any network node adjacent said selected network node has also received the maintenance task request;
confirming that said selected network node is ready to receive the maintenance task request, wherein said selected network node is confirmed as ready to receive the maintenance task request by verifying if said selected network node is compatible with said maintenance task request and no network node adjacent said selected network node has also received the maintenance task request; and
sending the maintenance task request to said selected network node containing the maintenance task to be completed at said selected network node if said selected network node is ready to complete said maintenance task.

2. A method as defined in claim 1, wherein said area is identified by selecting one or more geographical locations of said communication network as a Maintenance Region, MR, having similar maintenance requirements and having a Maintenance Policy, MP, associated with an MR, said MP providing scheduling information related to maintenance tasks and rules for said associated MR.

3. A method as defined in claim 2, wherein said network node is selected as requiring the maintenance task by determining if said network node is located in a MR with an associated MP suitable for receiving the maintenance task request, wherein said MR and MP are defined by collecting historical user traffic data for each network node in said communication network to identify geographical areas associated with said MR and maintenance scheduling information associated with said MP, such that an MP associated with an active user traffic region is differentiated from a MP with a less active user traffic region.

4. A method as defined in claim 1, wherein said network node neighbor information is obtained by accessing a neighbor relation table, NRT, to determine if any network node adjacent said selected network node have also received the maintenance task request.

5. A method as defined in claim 1, wherein another network node is selected if a neighboring node adjacent said selected network node has also received the maintenance task request.

6. A method as defined at least in claim 2, wherein said MR is defined as a geographical area on a communication network map using geographic annotation and visualization notations.

7. A method as defined at least in claim 3, wherein said MP is defined as maintenance schedule window defining a suitable time to perform maintenance tasks.

8. A method as defined in claim 7, wherein said MP defines a set of time related rules with an expiry period and each MR has a unique MP associated therewith.

9. A method as defined in any one of claims 1 to 8, wherein another network node is selected according to a maintenance management sequence and said maintenance management sequence is derived according to a list of maintenance tasks to be performed at said network node.

10. A method as defined in claim 9, wherein a maintenance task is assigned a candidacy number.

11. A method as defined in claim 10, wherein the maintenance task with the highest candidacy number is given priority.

12. A method as defined in any one claims 1 to 11, wherein said network node is cellular base station in a cellular communication network, or wherein said network node is an access point in a wireless local area communication network.

13. A method as defined in claim 10 when further depending on claim 2, wherein a candidacy number is determined according to a combination of one or more of a task level, location of a selected Network Element, NE, in a MR and MP at the time the maintenance task request for the completion of maintenance task is received at said communication network.

14. A computer-readable medium comprising code portions which, when executed on a processor, configure the processor to perform all steps of a method according to any one of the preceding method claims.

15. A system for automating a deployment of maintenance tasks to network nodes in a communication network, said system comprising:
a network manager unit (401) configured to store areas of said communication network requiring a maintenance task, said
area (101, 102, 103, 104) being identified by selecting one or more geographical locations of said communication network as a Maintenance Region, MR, (300) having similar maintenance requirements and having a Maintenance Policy, MP, associated with an MR, said MP providing scheduling information related to maintenance tasks and rules for said associated MR;
a maintenance application engine (405) configured to:
- select a network node in said identified area for receiving a maintenance task request to perform the maintenance task
- obtain network node neighbor information from neighboring nodes impacting said selected network node, wherein said network node neighbor information comprises an indication as to whether any network node adjacent said selected network node has also received the maintenance task request,
- confirm that said selected network node is ready to receive the maintenance task request, wherein said selected network node is confirmed as ready to receive a maintenance task request by verifying if said selected network node is compatible with said maintenance task request and no network node adjacent said selected network node has also received the maintenance task request; and
- to send the maintenance task request to said selected network node containing the maintenance task to be completed at said selected network node if said selected network node is ready to complete said maintenance task.

## Patentansprüche

1. Verfahren zur Automatisierung einer Bereitstellung von Wartungsaufgaben für Netzwerkknoten in einem Kommunikationsnetzwerk, umfassend:
Identifizieren eines Bereichs (101, 102, 103, 104) des Kommunikationsnetzwerks, der eine Wartungsaufgabe benötigt;
Auswählen eines Netzwerkknotens (301, 302) im identifizierten Bereich zum Empfangen einer Wartungsaufgabenanforderung zum Durchführen der Wartungsaufgabe;
Einholen von Netzwerkknoten-Nachbarinformationen von Nachbarknoten, die den ausgewählten Netzwerkknoten beeinflussen, wobei die Netzwerkknoten-Nachbarinformationen eine Anzeige dessen umfassen, ob ein Netzwerkknoten benachbart zum ausgewählten Netzwerkknoten ebenfalls die Wartungsaufgabenanforderung empfangen hat;
Bestätigen, dass der ausgewählte Netzwerkknoten zum Empfangen der Wartungsaufgabenanforderung bereit ist, wobei der ausgewählte Netzwerkknoten durch Verifizieren, ob der ausgewählte Netzwerkknoten mit der Wartungsaufgabenanforderung kompatibel ist und kein Netzwerkknoten benachbart zum ausgewählten Netzwerkknoten ebenfalls die Wartungsaufgabenanforderung empfangen hat, als zum Empfangen der Wartungsaufgabenanforderung bereit bestätigt wird; und
Senden der Wartungsaufgabenanforderung an den ausgewählten Netzwerkknoten, welche die am ausgewählten Netzwerkknoten durchzuführende Wartungsaufgabe enthält, wenn der ausgewählte Netzwerkknoten zum Durchführen der Wartungsaufgabe bereit ist.

2. Verfahren nach Anspruch 1, wobei der Bereich durch Auswählen eines oder mehrerer geografischer Orte des Kommunikationsnetzwerks als eine Wartungsregion, MR, mit ähnlichen Wartungserfordernissen und mit einer mit einer MR assoziierten Wartungsrichtlinie, MP, identifiziert wird, wobei die MP Planungsinformationen in Bezug auf Wartungsaufgaben und Regeln für die assoziierte MR bereitstellt.

3. Verfahren nach Anspruch 2, wobei der Netzwerkknoten durch Bestimmen, ob sich der Netzwerkknoten in einer MR mit einer assoziierten MP befindet, die zum Empfangen der Wartungsaufgabenanforderung geeignet ist, als die Wartungsaufgabe benötigend ausgewählt wird, wobei die MR und die MP durch Sammeln von historischen Benutzerverkehrsdaten für jeden Netzwerkknoten im Kommunikationsnetzwerk zum Identifizieren von mit der MR assoziierten geografischen Bereichen und mit der MP assoziierten Wartungsplanungsinformationen definiert werden, derart dass eine mit einer aktiven Benutzerverkehrsregion assoziierte MP von einer mit einer weniger aktiven Benutzerverkehrsregion assoziierten MP differenziert wird.

4. Verfahren nach Anspruch 1, wobei die Netzwerkknoten-Nachbarinformationen durch Zugreifen auf eine Nachbarbeziehungstabelle, NRT, eingeholt werden, um zu bestimmen, ob ein Netzwerkknoten benachbart zum ausgewählten Netzwerkknoten ebenfalls die Wartungsaufgabenanforderung empfangen hat.

5. Verfahren nach Anspruch 1, wobei ein anderer Netzwerkknoten ausgewählt wird, wenn ein Nachbarknoten benachbart zum ausgewählten Netzwerkknoten ebenfalls die Wartungsaufgabenanforderung empfangen hat.

6. Verfahren wenigstens nach Anspruch 2, wobei die MR unter Verwendung von geografischer Annotation und Visualisierungsnotationen als ein geografischer Bereich auf einer Kommunikationsnetzwerkkarte definiert wird.

7. Verfahren wenigstens nach Anspruch 3, wobei die MP als Wartungsplanfenster definiert wird, das eine geeignete Zeit zum Durchführen von Wartungsaufgaben definiert.

8. Verfahren nach Anspruch 7, wobei die MP einen Satz von zeitbezogenen Regeln mit einer Ablaufperiode definiert, und jede MR eine eindeutige MP damit assoziiert aufweist.

9. Verfahren nach einem der Ansprüche 1 bis 8, wobei ein anderer Netzwerkknoten gemäß einer Wartungsverwaltungsfolge ausgewählt wird, und die Wartungsverwaltungsfolge gemäß einer Liste von Wartungsaufgaben abgeleitet wird, die am Netzwerkknoten durchgeführt werden sollen.

10. Verfahren nach Anspruch 9, wobei der Wartungsaufgabe eine Kandidaturnummer zugeordnet wird.

11. Verfahren nach Anspruch 10, wobei der Wartungsaufgabe mit der höchsten Kandidaturnummer Vorrang gegeben wird.

12. Verfahren nach einem der Ansprüche 1 bis 11, wobei der Netzwerkknoten eine zellulare Basisstation in einem zellularen Kommunikationsnetzwerk ist, oder
wobei der Netzwerkknoten ein Zugangspunkt eines drahtlosen lokalen Kommunikationsnetzwerks ist.

13. Verfahren nach Anspruch 10, wenn ferner von Anspruch 2 abhängig, wobei die Kandidaturnummer bestimmt wird gemäß einer Kombination aus einem oder mehreren von einer Aufgabenebene, einem Standort eines ausgewählten Netzwerkelements, BNE, in einer MR und einer MP zu dem Zeitpunkt, zu dem die Wartungsaufgabenanforderung zur Durchführung der Wartungsaufgabe im Kommunikationsnetzwerk empfangen wird.

14. Computerlesbares Medium, umfassend Codeabschnitte, die bei Ausführung auf einem Prozessor den Prozessor so konfigurieren, dass er alle Schritte eines Verfahrens nach einem der vorhergehenden Ansprüche ausführt.

15. System zum Automatisieren einer Bereitstellung von Wartungsaufgaben für Netzwerkknoten in einem Kommunikationsnetzwerk, wobei das System umfasst:
Eine Netzwerkverwaltereinheit (401), die so konfiguriert ist, dass sie Bereiche des Kommunikationsnetzwerks speichert, die eine Wartungsaufgabe benötigen, wobei der Bereich (101, 102, 103, 104) durch Auswählen eines oder mehrerer geografischer Orte des Kommunikationsnetzwerks als eine Wartungsregion, MR, mit ähnlichen Wartungsanforderungen und mit einer mit einer MR assoziierten Wartungsrichtlinie, MP, identifiziert ist, wobei die MP Planungsinformationen in Bezug auf Wartungsaufgaben und Regeln für die assoziierte MR bereitstellt;
eine Wartungsanwendungsmaschine (405), die konfiguriert ist zum:
- Auswählen eines Netzwerkknotens im identifizierten Bereich zum Empfangen einer Wartungsaufgabe,
- Anfordern, die Wartungsaufgabe durchzuführen,
- Einholen von Netzwerkknoten-Nachbarinformationen von Nachbarknoten, die den ausgewählten Netzwerkknoten beeinflussen, wobei die Netzwerkknoten-Nachbarinformationen eine Anzeige dessen umfassen, ob ein Netzwerkknoten benachbart zum ausgewählten Netzwerkknoten ebenfalls die Wartungsaufgabenanforderung empfangen hat,
- Bestätigen, dass der ausgewählte Netzwerkknoten zum Empfangen der Wartungsaufgabenanforderung bereit ist, wobei der ausgewählte Netzwerkknoten durch Verifizieren, ob der ausgewählte Netzwerkknoten mit der Wartungsaufgabenanforderung kompatibel ist und kein Netzwerkknoten benachbart zum ausgewählten Netzwerkknoten ebenfalls die Wartungsaufgabenanforderung empfangen hat, als zum Empfangen einer Wartungsaufgabenanforderung bereit bestätigt wird; und
- Senden der Wartungsaufgabenanforderung an den ausgewählten Netzwerkknoten, welche die am ausgewählten Netzwerkknoten durchzuführende Wartungsaufgabe enthält, wenn der ausgewählte Netzwerkknoten zum Durchführen der Wartungsaufgabe bereit ist.

## Revendications

1. Procédé d'automatisation d'un déploiement de tâches de maintenance sur des noeuds de réseau dans un réseau de communication, comprenant :
l'identification d'une zone (101, 102, 103, 104) dudit réseau de communication nécessitant une tâche de maintenance ;
la sélection d'un noeud de réseau (301, 302) dans ladite zone identifiée pour la réception d'une demande de tâche de maintenance pour effectuer la tâche de maintenance ;
l'obtention d'informations de voisin de noeud de réseau depuis des noeuds voisins influençant ledit noeud de réseau sélectionné, dans lequel lesdites informations de voisin de noeud de réseau comprennent une indication indiquant si un noeud de réseau adjacent au dit noeud de réseau sélectionné a également reçu la demande de tâche de maintenance ;
la confirmation que ledit noeud de réseau sélectionné est prêt à recevoir la demande de tâche de maintenance, dans lequel il est confirmé que ledit noeud de réseau sélectionné est prêt à recevoir la demande de tâche de maintenance par la vérification si ledit noeud de réseau sélectionné est compatible avec ladite demande de tâche de maintenance et aucun noeud de réseau adjacent au dit noeud de réseau sélectionné n'a également reçu la demande de tâche de maintenance ; et
l'envoi de la demande de tâche de maintenance au dit noeud de réseau sélectionné contenant la tâche de maintenance à effectuer au dit noeud de réseau sélectionné si ledit noeud de réseau sélectionné est prêt à effectuer ladite tâche de maintenance.

2. Procédé selon la revendication 1, dans lequel ladite zone est identifiée par la sélection d'un ou plusieurs emplacements géographiques dudit réseau de communication en tant qu'une région de maintenance, MR, ayant des exigences de maintenance similaires et ayant une politique de maintenance, MP, associée à une MR, ladite MP fournissant des informations de programmation relatives à des tâches de maintenance et des règles pour ladite MR associée.

3. Procédé selon la revendication 2, dans lequel ledit noeud de réseau est sélectionné comme nécessitant la tâche de maintenance par la détermination si ledit noeud de réseau est situé dans une MR avec une MP associée appropriée pour la réception de la demande de tâche de maintenance, dans lequel lesdites MR et MP sont définies par le recueil de données historiques de trafic d'utilisateur pour chaque noeud de réseau dans ledit réseau de communication pour identifier des zones géographiques associées à ladite MR et des informations de programmation de maintenance associées à ladite MP, de sorte qu'une MP associée à une région de trafic d'utilisateur active soit différenciée d'une MP avec une région de trafic d'utilisateur moins active.

4. Procédé selon la revendication 1, dans lequel lesdites informations de voisin de noeud de réseau sont obtenues par l'accès à un tableau de relations de voisins, NRT, pour déterminer si un noeud de réseau adjacent au dit noeud de réseau sélectionné a également reçu la demande de tâche de maintenance.

5. Procédé selon la revendication 1, dans lequel un autre noeud de réseau est sélectionné si un noeud voisin adjacent au dit noeud de réseau sélectionné a également reçu la demande de tâche de maintenance.

6. Procédé selon la revendication 2, dans lequel ladite MR est définie en tant qu'une zone géographique sur une carte de réseau de communication en utilisant des notations de visualisation et d'annotation géographique.

7. Procédé selon la revendication 3, dans lequel ladite MP est définie en tant que fenêtre de programmation de maintenance définissant un temps approprié pour effectuer des tâches de maintenance.

8. Procédé selon la revendication 7, dans lequel ladite MP définit un ensemble de règles liées au temps avec une période d'expiration et chaque MR a une MP unique qui lui est associée.

9. Procédé selon l'une quelconque des revendications 1 à 8, dans lequel un autre noeud de réseau est sélectionné en fonction d'une séquence de gestion de maintenance et ladite séquence de gestion de maintenance est dérivée en fonction d'une liste de tâches de maintenance à effectuer au dit noeud de réseau.

10. Procédé selon la revendication 9, dans lequel un numéro de candidat est assigné à une tâche de maintenance.

11. Procédé selon la revendication 10, dans lequel une priorité est accordée à la tâche de maintenance ayant le plus grand numéro de candidat.

12. Procédé selon l'une quelconque des revendications 1 à 11, dans lequel ledit noeud de réseau est une station de base cellulaire dans un réseau de communication cellulaire, ou
dans lequel ledit noeud de réseau est un point d'accès dans un réseau local de communication sans fil.

13. Procédé selon la revendication 10 lorsqu'elle dépend en outre de la revendication 2, dans lequel un numéro de candidat est déterminé en fonction d'une combinaison d'un ou plusieurs d'un niveau de tâche, d'un emplacement d'un élément de réseau, NE, sélectionné dans une MR et une MP au moment de la réception de la demande de tâche de maintenance pour l'exécution de la tâche de maintenance au dit réseau de communication.

14. Support lisible par ordinateur comprenant des portions de code qui, lorsqu'elles sont exécutées sur un processeur, configurent le processeur pour effectuer toutes les étapes d'un procédé selon l'une quelconque des revendications de procédé précédentes.

15. Système d'automatisation d'un déploiement de tâches de maintenance sur des noeuds de réseau dans un réseau de communication, ledit système comprenant :
une unité de gestionnaire de réseau (401) configurée pour mémoriser des zones dudit réseau de communication nécessitant une tâche de maintenance, ladite zone (101, 102, 103, 104) étant identifiée par la sélection d'un ou plusieurs emplacements géographiques dudit réseau de communication en tant qu'une région de maintenance, MR, (300) ayant des exigences de maintenance similaires et ayant une politique de maintenance, MP, associée à une MR, ladite MP fournissant des informations de programmation relatives à des tâches de maintenance et des règles pour ladite MR associée ;
un moteur d'application de maintenance (405) configuré pour effectuer :
- la sélection d'un noeud de réseau dans ladite zone identifiée pour la réception d'une demande de tâche de maintenance pour effectuer la tâche de maintenance ;
- l'obtention d'informations de voisin de noeud de réseau depuis des noeuds voisins influençant ledit noeud de réseau sélectionné, dans lequel lesdites informations de voisin de noeud de réseau comprennent une indication indiquant si un noeud de réseau adjacent au dit noeud de réseau sélectionné a également reçu la demande de tâche de maintenance ;
- la confirmation que ledit noeud de réseau sélectionné est prêt à recevoir la demande de tâche de maintenance, dans lequel il est confirmé que ledit noeud de réseau sélectionné est prêt à recevoir une demande de tâche de maintenance par la vérification si ledit noeud de réseau sélectionné est compatible avec ladite demande de tâche de maintenance et aucun noeud de réseau adjacent au dit noeud de réseau sélectionné n'a également reçu la demande de tâche de maintenance ; et
- l'envoi de la demande de tâche de maintenance au dit noeud de réseau sélectionné contenant la tâche de maintenance à effectuer au dit noeud de réseau sélectionné si ledit noeud de réseau sélectionné est prêt à effectuer ladite tâche de maintenance.
